# FASCICULE DE BREVET EUROPEEN

(11) **EP 3 464 977 B1**
(45) Date de publication et mention de la délivrance du brevet: **24.11.2021**
(21) Numéro de dépôt: 17725681.5
(22) Date de dépôt: 28.04.2017
(51) Int. Cl.: F16L 13/02, F16L 1/16, F16L 58/18, F16L 59/20, B29C 65/16, B29C 65/34, B29C 65/00

(54) **PROCÉDÉ DE RACCORDEMENT DE DEUX ÉLÉMENTS UNITAIRES DE CONDUITE DE TRANSPORT DE FLUIDES AU MOYEN D'UN MANCHON**
VERFAHREN ZUM VERBINDEN ZWEIER EINHEITLICHER ELEMENTEN EINER LEITUNG ZUR FÖRDERUNG VON FLÜSSIGKEITEN DURCH EINE HÜLSE
METHOD FOR CONNECTING TWO UNITARY ELEMENTS OF A CONDUIT FOR TRANSPORTING FLUIDS BY MEANS OF A SLEEVE

(30) Priorité: 23.05.2016 FR 1654584
(43) Date de publication de la demande: 10.04.2019
(73) Titulaire: Saipem SA, 78180 Montigny-le-Bretonneux (FR)
(72) Inventeur: FATICA, Giulio, 20152 MILANO (IT); MAJDOUB, Taoufik, 93000 BOBIGNY (FR)
(74) Mandataire: Cabinet Beau de Loménie
(86) Numéro de dépôt international: PCT/FR2017/051009
(87) Numéro de publication internationale: WO 2017/203114

(56) Documents cités:
- EP-A1- 0 075 901
- WO-A1-2010/121339
- WO-A1-2012/098528
- DE-C1- 19 652 712
- US-A1- 2010 266 790

## Description

### Arrière-plan de l'invention

La présente invention se rapporte au domaine général des conduites de transport de fluide, notamment des conduites sous-marines, reposant au fond de la mer ou assurant la liaison fond-surface pour le transfert d'hydrocarbures, par exemple de pétrole et de gaz, issus de puits de production sous-marins. Elle concerne plus particulièrement le raccordement entre deux éléments unitaires de telles conduites.

Ces conduites sous-marines comprennent généralement un tube en alliage d'acier qui est recouvert d'un revêtement isolant externe, typiquement un polymère thermoplastique, limitant la déperdition de chaleur vers le milieu ambiant. L'épaisseur de ce revêtement externe varie suivant les conditions d'exploitation du fluide à transporter (longueur de la conduite, température du fluide, composition du fluide, etc.).

Généralement, ces conduites sont assemblées à terre en éléments de longueur unitaire (on parle de double, triple ou quadruple joints, ci-après indifféremment dénommées « quad-joints » pour quadruple sections de tube). Ces quad-joints sont alors transportées en mer sur un navire de pose.

Lors de la pose, les quad-joints sont raccordés les uns aux autres à bord du navire et au fur et à mesure de leur pose en mer. La pose peut s'effectuer par l'intermédiaire d'une tour de pose en J ou en S positionnée sur le navire de pose. Avec la pose en J, la conduite sous-marine est typiquement descendue du navire de pose pratiquement verticale (entre +30° et -10° par rapport à la verticale). La pose en J est une pose caténaire simple dans laquelle l'inclinaison quasi-verticale de la conduite diminue au fur et à mesure de son déplacement vers le bas jusqu'à épouser la pente du fond de la mer. Avec la pose en S, la conduite sous-marine est typiquement descendue du navire de pose pratiquement à l'horizontale et se courbe ensuite pour atteindre le fond marin.

Les techniques de pose en J et en S nécessitent de raccorder sur le navire de pose chaque nouveau quad-joint à la conduite sous-marine avant de le descendre dans la mer en déplaçant le navire de pose. Cette étape de raccordement du nouveau quad-joint à la conduite sous-marine s'effectue en soudant bout à bout les extrémités libres en acier des tubes respectifs du nouveau quad-joint et de la conduite sous-marine. Le raccordement du nouveau quad-joint et de la conduite sous-marine isolée est rendu possible par une opération préliminaire réalisée après le revêtement en usine des quad-joints, cette opération consistant à retirer le revêtement isolant aux extrémités sur une longueur définie permettant l'installation des équipements de soudage et de contrôle non destructif.

Une fois que ces extrémités sont soudées entre elles, il est nécessaire de recouvrir la zone de la conduite comprenant la soudure ainsi que les portions du tube de la conduite pour laquelle le revêtement isolant externe a été retiré (cette zone appelée ci-après « zone de retrait du revêtement isolant » ou « cut-back » en anglais) d'un nouveau revêtement isolant en s'assurant que ce recouvrement soit posé de manière totalement étanche avec le reste du revêtement isolant externe de la conduite. A cet effet, la zone de retrait du revêtement isolant peut être recouverte par plusieurs couches successives de différents matériaux polymères. Par exemple, on appliquera, après la préparation de la surface d'acier nue par grenaillage, une première couche relativement fine formant un primaire de protection à la corrosion directement appliqué sur la zone de retrait du revêtement, une deuxième couche plus épaisse d'un adhésif à base de polymère sur le primaire d'adhésion, et une troisième couche relativement épaisse sur l'adhésif au minimum de l'épaisseur du revêtement appliqué sur la conduite. Alternativement, on pourra, après le dépôt d'un primaire d'adhésion sur la zone de retrait du revêtement, effectuer une injection par moulage de matière isolante.

Ce procédé d'application du revêtement isolant externe au niveau de la zone de retrait du revêtement est connu sous le nom de « Field Joint Coating », à savoir « revêtement de joint de conduite » en anglais. On pourra se référer au document WO 2012/098528 qui décrit un exemple d'une telle technique d'application.

Cette technique de « Field Joint Coating » présente cependant un certain nombre d'inconvénients. Elle nécessite notamment un temps de réalisation relativement long et donc contraignant (typiquement de l'ordre de 20 à 30mn par opération). Lorsqu'elle implique une injection de matière par moulage, cette technique présente un problème d'adhésion du moulage sur la zone de retrait du revêtement isolant de la conduite, à savoir que la durabilité du système est tributaire du succès de la cohésion du joint moulé sur le revêtement existant. Enfin, il s'agit d'une technique d'application qui offre peu de souplesse.

Le document WO 2010/121339 A montre un procédé de raccordement de deux éléments unitaires d'une conduite de transport de fluides.

### Objet et résumé de l'invention

La présente invention a donc pour but principal de proposer un procédé de raccordement qui ne présente pas les inconvénients précités du « Field Joint Coating ».

Conformément à l'invention, ce but est atteint grâce à un procédé de raccordement selon la revendication 1.

Le procédé selon l'invention est remarquable en qu'il utilise un manchon qui est glissé sur la zone de retrait du revêtement isolant externe pour la recouvrir et qui est fixé par soudage de manière étanche sur ce revêtement. Ce manchon, qui est réalisé dans un matériau thermoplastique, permet de garantir une continuité du revêtement au niveau de la zone de raccordement entre les deux éléments unitaires de conduite, c'est-à-dire de garantir l'étanchéité. De plus, le temps de soudage du manchon peut être très faible, de l'ordre de 3mn environ, ce qui représente un gain de temps conséquent par rapport à la technique du « Field Joint Coating » de l'art antérieur. En outre, grâce au recours du soudage, la fixation du manchon ne présente aucun problème d'adhésion sur les éléments unitaires de conduite. Enfin, ce procédé est applicable à tout matériau thermoplastique utilisé pour la réalisation du revêtement isolant externe et à toutes les dimensions d'élément unitaire de conduite.

L'étape de fixation étanche du manchon sur le revêtement isolant externe des deux éléments unitaires de conduite peut être réalisée par soudage par laser (technique dite en anglais de « Laser Bonded Coating » pour revêtement collé par laser).

Dans ce cas, le matériau constitutif du manchon peut être transparent ou translucide à la longueur d'onde du laser afin de permettre au laser de traverser le manchon jusqu'à des surfaces à souder, le soudage par laser du manchon comprenant l'éventuel positionnement entre des surfaces en contact du manchon et du revêtement isolant externe des deux éléments unitaires de conduite de films en matériau absorbant à la longueur d'onde du laser.

Alternativement, l'étape de fixation étanche du manchon sur le revêtement isolant externe des deux éléments unitaires de conduite peut être réalisée par soudage par électro-fusion (technique dite en anglais de « Fusion Bonded Coating » pour revêtement collé par fusion).

Dans ce cas, le manchon peut comprendre au moins une résistance électrique au niveau d'une surface interne qui est, lors de l'étape de positionnement du manchon, mise en contact avec les portions du revêtement isolant externe des éléments unitaires de conduite recouvertes par ledit manchon et qui est connectée à une source d'énergie électrique pour provoquer une fusion en surface du matériau constitutif du manchon apte à assurer une fixation étanche du manchon sur le revêtement isolant externe des éléments unitaires de conduite.

L'étape de positionnement du manchon peut comprendre le glissement du manchon le long de l'un des deux éléments unitaires de conduite.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 à 5 montrent différentes étapes d'un procédé de raccordement de deux éléments unitaires de conduite sous-marine selon un mode de réalisation de l'invention qui n'est pas compris dans le cadre des revendications;
- les figures 6A et 6B représentent une variante de réalisation de la fixation étanche du manchon par la technique de soudage par laser ; et
- la figure 7 représente un autre mode de réalisation de l'invention dans lequel il n'y a pas d'injection de matière isolante à l'intérieur de la zone de retrait du revêtement isolant externe.

### Description détaillée de l'invention

L'invention s'applique au raccordement de deux éléments unitaires d'une conduite, notamment sous-marine, de transport de fluides tels que des hydrocarbures, par exemple du pétrole et du gaz issus de puits de production sous-marins.

Un domaine d'application de l'invention est celui des conduites sous-marines de type « Single Pipe » (pour tube unique), par opposition aux conduites coaxiales dites PIP (pour « Pipe In Pipe » pour conduite dans une conduite).

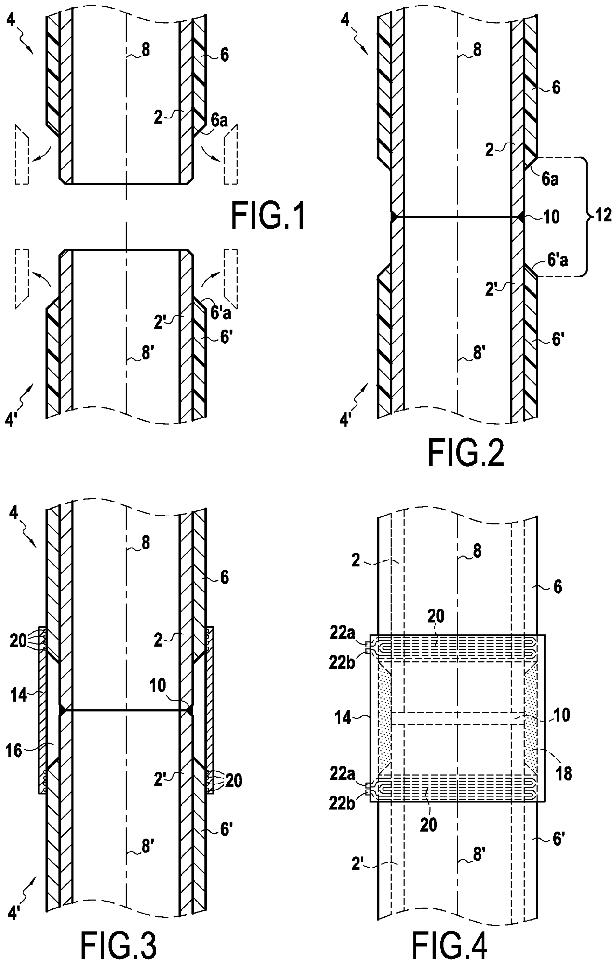

Les figures 1 à 5 montrent un exemple d'application de l'invention au raccordement de tubes 2, 2' respectifs de deux éléments unitaires 4, 4' (appelés ci-après « quad-joints ») d'une telle conduite sous-marine.

De façon connue, le tube 2, 2' respectifs de ces quad-joints est réalisé en alliage d'acier et est recouvert d'un revêtement isolant externe, respectivement 6, 6', destiné à limiter la déperdition de chaleur vers le milieu ambiant. Typiquement, ce revêtement isolant externe est constitué à partir d'un polymère thermoplastique, par exemple de polypropylène, et peut être formé de différentes couches dont la constitution peut varier suivant les conditions d'exploitation. On pourra par exemple recourir à une composition de revêtement isolant externe formé de couches internes en polypropylène moussé ou chargé en microsphères creuses de verre (on parle alors de mousse syntactique) et de couches externes en polypropylène pur.

Lors de la pose en mer de la conduite sous-marine, les quad-joints sont raccordés les uns aux autres à bord du navire de pose et au fur et à mesure de leur pose en mer (la pose pouvant être en J ou en S). Ces techniques de pose nécessitent de raccorder sur le navire de pose chaque nouveau quad-joint au dernier quad-joint assemblé de la conduite sous-marine avant de le descendre dans la mer en déplaçant le navire de pose.

A cet effet, comme représenté sur la figure 1, il est dans un premier temps nécessaire de retirer le revêtement isolant externe 6, 6' sur une portion d'extrémité des tubes 2, 2' du nouveau quad-joint 4 à assembler et du dernier quad-joint 4' assemblé de la conduite sous-marine.

Cette étape est par exemple réalisée au moyen de différentes techniques d'usinage mécanique des revêtements isolant externes 6, 6'. Cette découpe peut prendre plusieurs formes au niveau de l'extrémité 6a, 6'a respective des revêtements isolant externes 6, 6'. Ainsi, comme plus particulièrement visible sur la figure 4, ces extrémités 6a, 6'a peuvent être découpées en forme de tronc de cône. Alternativement, ces extrémités pourraient présenter d'autres formes, telles que par exemple une forme droite, une forme en marches d'escalier, etc.

L'étape suivante du procédé de raccordement consiste à aligner l'axe longitudinal 8 du nouveau quad-joint 4 à assembler avec l'axe longitudinal 8' du dernier quad-joint 4' assemblé de la conduite sous-marine et à rapprocher ces quad-joints entre eux pour mettre l'extrémité libre de leur tube respectif 2, 2' en contact l'une avec l'autre (figure 2).

Ces tubes 2, 2' en acier sont alors soudés entre eux au niveau de leur extrémité libre de façon à former un cordon de soudure annulaire 10 entre les tubes. Ce soudage pourra être réalisé en une ou plusieurs passes par toute technique de soudage connue, notamment en passant par l'extérieur ou par l'intérieur des quad-joints.

Les tubes 2, 2' ainsi soudés entre eux, ils forment une zone annulaire 12 de retrait du revêtement isolant (également appelée « cut-back » en anglais) qui est délimitée longitudinalement entre les extrémités 6a, 6'a respectives des revêtements isolant externes 6, 6'.

Une fois les tubes 2, 2' soudés entre eux, le procédé de raccordement selon l'invention prévoit de positionner un manchon annulaire 14 autour de la zone de retrait 12 du revêtement isolant externe, ce manchon 14 présentant un diamètre interne légèrement supérieur au diamètre externe des quad-joints 4, 4' recouverts de leur revêtement isolant externe 6, 6' pour pouvoir être glissé le long de ceux-ci et une longueur supérieure à la longueur de la zone de retrait du revêtement isolant externe de sorte à venir recouvrir en partie le revêtement isolant externe des deux éléments unitaires de conduite.

Préalablement au positionnement du manchon 14, la surface annulaire de la zone de retrait 12 du revêtement isolant pourra avoir été traitée, par exemple en réalisant un traitement de surface consistant en un grenaillage de la surface d'acier nu, suivi d'une application d'un revêtement polymérique de faible épaisseur, assurant la fonctionnalité d'une barrière anticorrosion, pouvant être appliqué soit sous forme liquide par transfert à l'aide d'un outil de contact ou par pulvérisation, soit sous forme de poudre ou bien encore sous forme d'un manchon thermorétractable. Pour des raisons mécaniques propres aux caractéristiques d'installation et d'opération de la ligne, le cordon de soudure pourrait être également traité en réalisant un traitement de suppression du laitier issu de l'opération de soudure (par meulage) afin d'obtenir une surface parfaitement plane.

Le manchon 14 est réalisé dans un matériau thermoplastique pouvant être le même que le matériau utilisé pour réaliser le revêtement isolant externe 6, 6' des quad-joints.

Une fois le manchon positionné, il est fixé de façon étanche sur le revêtement isolant externe selon un processus décrit ci-après.

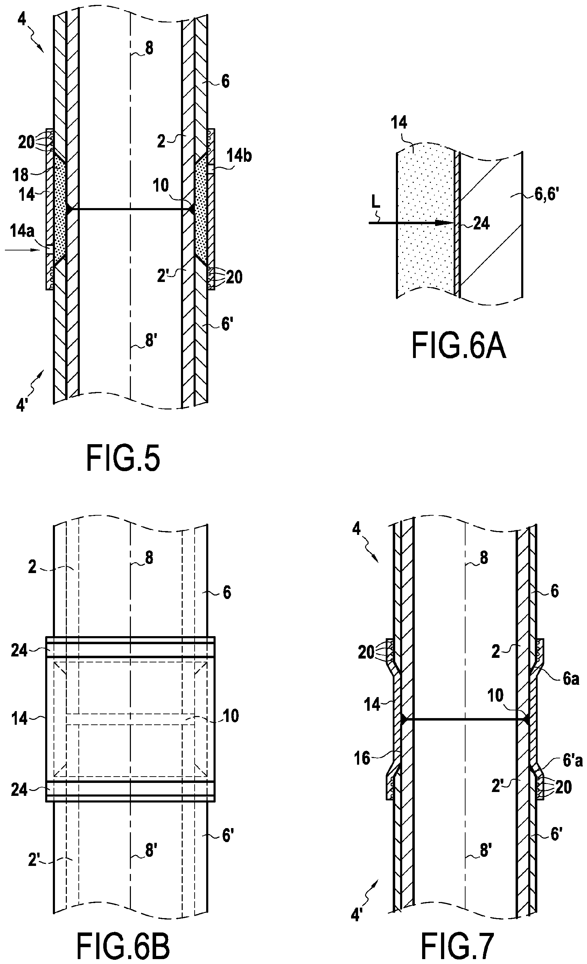

Cette étape de fixation étanche peut être réalisée par soudage par électro-fusion (technique dite de « Fusion Bonded Coating » - figures 1 à 5) ou par soudage par laser (technique dite de « Laser Bonded Coating » - figures 6A et 6B).

Le soudage par électro-fusion consiste à souder directement le manchon 14 sur le revêtement isolant externe 6, 6' à l'aide d'une ou plusieurs résistances électriques 20 intégrées dans le manchon dès la fabrication de celui-ci, le manchon étant réalisé dans un matériau thermoplastique qui est compatible thermochimiquement avec le matériau thermoplastique des revêtements isolant externes des quad-joints.

Ainsi, comme représenté sur le figures 3 à 5, le manchon 14 intègre sur sa surface interne, et au niveau de chacune de ses deux extrémités longitudinales, une résistance électrique 20, cette résistance électrique venant en contact avec les portions du revêtement isolant externe 6, 6' des quad-joints recouvertes par ledit manchon.

Au cours de l'étape de soudage proprement dite, ces résistances électriques 20 sont connectées par des paires de connecteurs 22a, 22b à une source d'énergie électrique (non représentée sur les figures) pour provoquer une fusion en surface du matériau constitutif du manchon apte à assurer une fixation étanche du manchon sur le revêtement isolant externe des deux tubes des quad-joints. Plus précisément, la dissipation par effet Joule de la puissance électrique fournie aux résistances électriques a pour effet de provoquer une fusion en surface du matériau constitutif du manchon. Le mélange intime du matériau du manchon et du matériau des revêtements isolant externes des tubes permet d'assurer une cohésion et une étanchéité parfaites entre le manchon et ces revêtements isolant externes.

Comme représenté sur les figures 6A et 6B, l'étape de fixation étanche du manchon peut alternativement être réalisée par soudage par laser.

A cet effet, comme représenté de façon schématique sur la figure 6A, le matériau constitutif du manchon 14 est transparent (ou translucide) à la longueur d'onde du laser utilisé pour le soudage et on vient positionner des films 24 en matériau absorbant à la longueur d'onde du laser utilisé au niveau de l'extrémité des revêtements isolant externes 6, 6' recouverte par le manchon si le revêtement isolant externe est moins absorbant que le manchon. Dans le cas où le revêtement isolant externe est réalisé dans un matériau qui est plus absorbant que celui du manchon, de tels films ne sont pas nécessaires

De la sorte, au cours de l'étape de fixation étanche du manchon, on applique un faisceau laser L dirigé vers le matériau absorbant (le revêtement isolant externe ou les films 24 si nécessaire). La constitution transparente au laser du manchon permet au faisceau laser de traverser celui-ci dans le sens de son épaisseur pour atteindre le matériau absorbant à la longueur d'onde du faisceau laser L (revêtement isolant externe ou film). Ce matériau étant absorbant, l'énergie électromagnétique du faisceau laser est convertie en chaleur provoquant une fusion en surface du matériau constitutif du manchon. Le mélange intime du matériau du manchon avec le matériau constitutif des revêtements isolant externes 6, 6' (au niveau de leurs extrémités recouvertes par le manchon) permet ainsi d'assurer une cohésion et une étanchéité parfaites entre le manchon et ces revêtements isolant externes.

On notera que le faisceau laser L pourra s'appliquer sur le manchon depuis l'extérieur de la conduite, par exemple grâce à un laser dirigé vers les surfaces à souder et apte à pivoter autour de l'axe longitudinal de la conduite.

Une fois le manchon fixé de façon étanche sur le revêtement isolant externe, il délimite à l'extérieur une cavité annulaire 16 qui est délimitée à l'intérieur par la zone de retrait 12 du revêtement isolant.

Dans le mode de réalisation des figures 1 à 6, qui n'est pas compris dans le cadre des revendications, il est alors prévu d'injecter à l'intérieur de cette cavité 16 une matière isolante 18 se présentant à chaud sous la forme d'un liquide ou d'un gel qui est apte à se solidifier à l'intérieur de la cavité lorsqu'il se refroidit. A titre d'exemple, le matériau pourrait être du polyuréthane sous forme solide ou moussé ou un gel à base de polyuréthane et d'un composé organique type kérosène par exemple.

Pour ce faire, le manchon 14 est percé d'un premier orifice 14a pour réaliser l'injection de la matière isolante 18 et d'un second orifice 14b pour assurer une mise à la pression ambiante de la cavité 16 (figure 5). Typiquement, on pourra utiliser un outil d'injection venant se positionner autour du manchon et permettant l'injection de la matière isolante en appliquant pendant celle-ci une pression sur le manchon pour contrer celle due à l'injection (ce qui aura également pour avantage de faciliter la soudure).

Ces orifices 14a, 14b pourront avoir été pratiqués lors de la fabrication du manchon et leur emplacement sur ce dernier dépend notamment de la position (verticale ou horizontale) des quad-joints 4, 4' lors de leur raccordement.

Une fois la matière isolante 18 injectée à l'intérieur de la cavité 16, le procédé prévoit de fermer de façon étanche les orifices 14a, 14b du manchon qui ont été utilisées pour cette injection. Cette étape peut être réalisée grâce à des patchs ou à des bouchons (en matière plastique par exemple) qui sont positionnés de façon étanche au niveau des orifices 14a, 14b.

En liaison avec la figure 7, on décrira maintenant un autre mode de réalisation de l'invention.

Ce mode de réalisation s'applique plus particulièrement à des revêtements isolant externes qui présentent une faible épaisseur, par exemple inférieure à 10mm environ. Il prévoit également de positionner un manchon 14 autour de la zone de retrait 12 du revêtement isolant externe de sorte à recouvrir en partie le revêtement isolant externe 6, 6' au niveau de leur extrémité 6a, 6'a. Une fois positionné, le manchon 14 est fixé de façon étanche sur ce revêtement isolant externe par électro-fusion (à l'aide d'une ou plusieurs résistances électriques 20 comme représenté sur la figure 7) ou par soudage par laser (mode de réalisation non représenté) comme décrit précédemment.

Par rapport au mode de réalisation précédemment décrit, compte-tenu de la faible épaisseur des revêtements isolant externes, aucune injection de matière isolante n'est prévue à l'intérieur de la cavité annulaire 16 délimitée entre le manchon 14 et la zone de retrait du revêtement isolant externe.

L'épaisseur de cette cavité 16 étant faible, et la pente des extrémités 6a, 6'a des revêtements isolant externes 6, 6' étant avantageusement douce, le manchon 14 va, sous l'effet de l'application d'une pression extérieure comprise entre 1 et 2 bars, se déformer plastiquement et épouser la forme des quad-joints sans risquer de se déchirer. L'application de cette pression extérieure est de préférence exercée par l'intermédiaire d'un outil adéquat avant ou pendant l'étape de fixation étanche par soudage du manchon, ou après l'étape de fixation étanche par soudage du manchon par la pression hydrostatique.

## Revendications

1. Procédé de raccordement de deux éléments unitaires (4, 4') d'une conduite de transport de fluides, chaque élément unitaire de conduite étant réalisé en alliage métallique et étant recouvert d'un revêtement isolant externe (6, 6') réalisé dans un matériau thermoplastique à l'exception d'une portion d'extrémité dépourvue de revêtement isolant externe, le procédé comprenant :
une étape de soudage des deux éléments unitaires de conduite mis bout à bout au niveau de leur portion d'extrémité dépourvue de revêtement isolant externe de sorte à former une zone annulaire de retrait (12) du revêtement isolant externe ;
une étape de positionnement d'un manchon annulaire (14) autour de la zone de retrait du revêtement isolant externe et en partie autour du revêtement isolant externe des deux éléments unitaires de conduite, le manchon étant réalisé dans un matériau thermoplastique ;
une étape de fixation étanche par soudage du manchon sur le revêtement isolant externe des deux éléments unitaires de conduite ; et
une étape d'application d'une pression extérieure sur le manchon pour lui permettre de se déformer plastiquement et épouser la forme des portions d'extrémité respectives des deux éléments unitaires de conduite.

2. Procédé selon la revendication 1, dans lequel l'étape de fixation étanche du manchon (14) sur le revêtement isolant externe (6, 6') des deux éléments unitaires de conduite est réalisée par soudage par laser.

3. Procédé selon la revendication 2, dans lequel le matériau constitutif du manchon est transparent ou translucide à la longueur d'onde du laser afin de permettre au laser de traverser le manchon jusqu'à des surfaces à souder, le soudage par laser du manchon comprenant l'éventuel positionnement entre des surfaces en contact du manchon et du revêtement isolant externe des deux éléments unitaires de conduite de films (24) en matériau absorbant à la longueur d'onde du laser.

4. Procédé selon la revendication 1, dans lequel l'étape de fixation étanche du manchon (14) sur le revêtement isolant externe des deux éléments unitaires de conduite est réalisée par soudage par électro-fusion.

5. Procédé selon la revendication 4, dans lequel le manchon comprend au moins une résistance électrique (20) au niveau d'une surface interne qui est, lors de l'étape de positionnement du manchon, mise en contact avec les portions du revêtement isolant externe des éléments unitaires de conduite recouvertes par ledit manchon et qui est connectée à une source d'énergie électrique pour provoquer une fusion en surface du matériau constitutif du manchon apte à assurer une fixation étanche du manchon sur le revêtement isolant externe des éléments unitaires de conduite.

6. Procédé selon l'une quelconque des revendications 1 à 5, dans lequel l'étape de positionnement du manchon (14) comprend le glissement du manchon le long de l'un des deux éléments unitaires de conduite.

7. Procédé selon l'une quelconque des revendications 1 à 6, dans lequel la pression extérieure appliquée sur le manchon est comprise entre 1 et 2 bars.

8. Procédé selon l'une quelconque des revendications 1 à 7, dans lequel la pression extérieure est appliquée sur le manchon avant, pendant ou après l'étape de fixation étanche par soudage du manchon.

## Patentansprüche

1. Verfahren zur Verbindung von zwei einheitlichen Elementen (4, 4') einer Leitung zum Transport von Flüssigkeiten, wobei jedes einheitliche Leitungselement aus einer Metalllegierung hergestellt und mit einer äußeren isolierenden Beschichtung (6, 6') bedeckt ist, die aus einem thermoplastischen Material besteht, mit der Ausnahme eines Endabschnittes, der frei von einer äußeren isolierenden Beschichtung ist, wobei das Verfahren umfasst:
einen Schritt des Schweißens der beiden einheitlichen Leitungselemente, die auf Höhe ihres Endabschnittes, der frei von einer äußeren isolierenden Beschichtung ist, aneinandergefügt sind, um einen ringförmigen ausgesparten Bereich (12) der äußeren isolierenden Beschichtung zu bilden,
einen Schritt des Positionierens einer ringförmigen Hülse (14) um den ausgesparten Bereich der äußeren isolierenden Beschichtung und teilweise um die äußere isolierende Beschichtung der beiden einheitlichen Leitungselemente herum, wobei die Hülse aus einem thermoplastischen Material umgesetzt ist,
einen Schritt des dichtenden Schweißbefestigens der Hülse an der äußeren isolierenden Beschichtung der beiden einheitlichen Leitungselemente und
einen Schritt des Ausübens eines äußeren Drucks auf die Hülse, um zu ermöglichen, dass sie sich plastisch verformt und die Form der jeweiligen Endabschnitte der beiden einheitlichen Leitungselemente annimmt.

2. Verfahren nach Anspruch 1, wobei der Schritt des dichtenden Befestigens der Hülse (14) an der äußeren isolierenden Beschichtung (6, 6') der beide einheitlichen Leitungselemente durch Laserschweißen umgesetzt wird.

3. Verfahren nach Anspruch 2, wobei das Material, das die Hülse bildet, transparent oder lichtdurchlässig bei der Wellenlänge des Lasers ist, um zu ermöglichen, dass der Laser die Hülse bis zu den zu schweißenden Oberflächen durchquert, wobei das Laserschweißen der Hülse die potentielle Positionierung von Folien (24) aus absorbierendem Material entlang der Wellenlänge des Lasers zwischen den Oberflächen in Kontakt mit der Hülse und mit der äußeren isolierenden Beschichtung der beiden einheitlichen Leitungselemente umfasst.

4. Verfahren nach Anspruch 1, wobei der Schritt des dichtenden Befestigens der Hülse (14) an der äußeren isolierenden Beschichtung der beiden einheitlichen Leitungselemente durch Elektrofusionsschweißen umgesetzt wird.

5. Verfahren nach Anspruch 4, wobei die Hülse mindestens einen elektrischen Widerstand (20) auf Höhe einer inneren Oberfläche umfasst, die während des Schrittes des Positionierens der Hülse mit den Abschnitten der äußeren isolierenden Beschichtung der einheitlichen Leitungselemente in Kontakt gebracht wird, die mit der Hülse bedeckt sind, und die mit einer elektrischen Energiequelle verbunden ist, um ein Schmelzen auf der Oberfläche des Materials, das die Hülse bildet, hervorzurufen, die dazu geeignet ist, eine dichtende Befestigung der Hülse auf der äußeren isolierenden Beschichtung der einheitlichen Leitungselemente sicherzustellen.

6. Verfahren nach einem der Ansprüche 1 bis 5, wobei der Schritt des Positionierens der Hülse (14) das Schieben der Hülse entlang eines der beiden einheitlichen Leitungselemente umfasst.

7. Verfahren nach einem der Ansprüche 1 bis 6, wobei der äußere Druck, der auf die Hülse ausgeübt wird, zwischen 1 und 2 bar beträgt.

8. Verfahren nach einem der Ansprüche 1 bis 7, wobei der äußere Druck vor, während oder nach dem Schritt des dichtenden Schweißbefestigens der Hülse auf die Hülse ausgeübt wird.

## Claims

1. A method of connecting together two unit elements (4, 4') of a fluid transport pipe, each unit pipe element being made of metal alloy and being covered in an outer insulating coating (6, 6') made of a thermoplastic material, with the exception of an end portion that does not have an outer insulating coating, the method comprising:
a step of welding together two unit pipe elements abutting at their end portions not having any outer insulating coating so as to form an annular cut-back (12);
a step of positioning an annular sleeve (14) around the cut-back and in part around the outer insulating coatings of the two unit pipe elements, the sleeve being made of a thermoplastic material;
a step of fastening the sleeve in sealed manner by weld bonding on the outer insulating coatings of the two unit pipe elements; and
a step of applying an external pressure on the sleeve to enable it to be deformed plastically and match the shape of the respective end portions of the two unit pipe elements.

2. A method according to claim 1, wherein the step of fastening the sleeve (14) in sealed manner on the outer insulating coatings (6, 6') of the two unit pipe elements is performed by laser-bonded coating.

3. A method according to claim 2, wherein the material constituting the sleeve is transparent or translucent at the laser wavelength in order to allow the laser to pass through the sleeve to the surfaces to be bonded together, the laser-bonded coating of the sleeve optionally including positioning films (24) of material that is absorbent at the laser wavelength between the contacting surfaces of the sleeve and of the outer insulating coatings of the two unit pipe elements$$.

4. A method according to claim 1, wherein the step of fastening the sleeve (14) in sealed manner on the outer insulating coatings of the two unit pipe elements is performed by fusion-bonded coating.

5. A method according to claim 4, wherein the sleeve includes at least one electrical resistance (20) at an internal surface that, during the step of positioning the sleeve, is put into contact with the portions of the outer insulating coatings of the unit pipe elements that are covered by said sleeve and that is connected to a source of electricity in order to cause the surface of the material constituting the sleeve to melt so as to provide sealed fastening of the sleeve on the outer insulating coatings of the unit pipe elements.

6. A method according to any one of claims 1 to 5, wherein the step of positioning the sleeve (14) includes sliding the sleeve along one of the unit pipe elements.

7. A method according to any one of claims 1 to 6, wherein the external pressure applied on the sleeve lies in the range 1 bar to 2 bars.

8. A method according to any one of claims 1 to 7, wherein the external pressure is applied on the sleeve before, during, and after the step of fastening the sleeve in sealed manner by weld bonding.
